# EUROPEAN PATENT SPECIFICATION

(11) **EP 4 603 266 B1**
(45) Date of publication and mention of the grant of the patent: **15.04.2026**
(21) Application number: 25174739.0
(22) Date of filing: 09.11.2023
(51) Int. Cl.: B29D 11/00

(54) **INK JET PRINTING METHOD OF TINTING A SPECTACLE LENS AND TINTED SPECTACLE LENS**
TINTENSTRAHLDRUCKVERFAHREN ZUM FÄRBEN EINES BRILLENGLASES UND GEFÄRBTES BRILLENGLAS
PROCÉDÉ D'IMPRESSION À JET D'ENCRE POUR TEINTER UN VERRE DE LUNETTES ET VERRE DE LUNETTES TEINTÉ

(30) Priority: 10.11.2022 EP 22206783
(43) Date of publication of application: 20.08.2025
(62) Divisional of application: 23804674.2
(73) Proprietor: Carl Zeiss Vision International GmbH, 73430 Aalen (DE)
(72) Inventor: LIU, Yujing, 73430 Aalen (DE); REESE, Martin, 73430 Aalen (DE); WEIS, Philipp, 73430 Aalen (DE); HUGENBERG, Norbert, 73430 Aalen (DE); KARIM, Waiz, 73430 Aalen (DE)
(74) Representative: Louis Pöhlau Lohrentz

(56) References cited:
- JP-B2- 5 082 461
- US-A1- 2015 277 143
- US-A1- 2018 095 190
- US-A1- 2020 122 487

## Description

The present invention is directed to an ink jet printing method of tinting a spectacle lens and a tinted spectacle lens.

Spectacle lenses can be tinted with specific colors, for example, in a homogenous or in a gradient-like manner. Tinted spectacle lenses are generally requested by customers, for example, for medical reasons, if the eyes of the customers are sensitive to a certain wavelength or wavelength range, for eye protection, for example, from outdoor activities, or simply for reasons of fashion. The spectacle lenses are generally tinted by immersing clear spectacle lens substrates into a dye bath.

A dye bath is usually a mixture of organic solvent(s), water, acid(s) and dye(s). The dye bath is usually cooked constantly at a temperature at 90 to 100°C into which a clear spectacle lens substrate is immersed for an appropriate time. The time can last from a few minutes to a couple of hours. In comparison with solid tint products (with equal color density along the lens substrate), the process for gradient tinting of spectacle lenses requires more precise and reproducible processing than is required for solid tinting or coloring. Moreover, some spectacle lens substrates, such as polycarbonate lens material, absorb dyes very poorly, and this will lead to prolonged process time to reach sufficient level of color density.

Irrespective of the significant time for tinting a spectacle lens, a method of tinting a spectacle lens using a dye bath is generally not friendly to the health of a worker working in the tinting production line. Due to the required high range of temperature of, for example, 90 to 100°C, high boiling point solvents, such as benzyl alcohol, are used. Thus, it cannot be excluded that a worker working at a dye bath is exposed to a certain extent to the organic solvent, such as, for example, benzyl alcohol.

Moreover, a method of tinting a spectacle lens in a dye bath at about 90 to 100°C leads to a significant energy consumption of, for example, electricity. Moreover, organic solvent and water is at least partially vaporized and needs to be collected and/or replenished leading also to significant costs.

Finally, it is of importance that the spectacle lenses can be tinted with a reproducible and reliable quality. Thus, it is very critical that the spectacle lenses are tinted with a constant color density from batch to batch or from product to product. A varying color density could be due to a varying dye concentration in the dye bath, for example, due to the uptake rate of dye(s) or vaporization of a certain amount of organic solvent and/or water.

Out of the above and mostly practical reasons, a more digital-controlled process, inkjet printing, has been explored in the field of ophthalmic industry.

US 2013/0230649 A1 is directed to a process for tinting articles and tintable compositions for use in said process. The object underlying US 2013/0230649 A1 is to provide a process for tinting articles by ink jet printing wherein a more intense coloration is provided and wherein homogeneity of the tinting is preserved. According to the teaching of US 2013/0230649 A1, a porous ink receptive coating is to be used. The porous ink receptive coating can be a permanent coating or a temporary coating, both being tintable by ink jet printing. When the porous ink receptive coating is a temporary coating, the porous ink receptive coating is tinted by ink jet printing, then the dye(s) are transferred into the substrate and the porous ink receptive coating is to be removed. The porous ink receptive coating is applied by hydrolyzation of silicon organic compound(s) leading to a porous film. The porosity of the film allows (a) dye(s) to penetrate in the porous ink receptive coating. After application of the porous ink receptive coating composition onto the surface of the optical article, the composition is dried or cured, for example by drying with air in an oven or by using a dryer to provide a porous ink receptive coating. Generally, a temperature of 50 to 130°C is employed. During the process, the dyes diffuse into the ink receptive layer, which means they are not fixed and thus, can move in following processes like overcoating, which can lead to ink bleeding and bad resolution control. Additionally, this method suggested in US 2013/0230649 A1 that a porous ink receptive coating is to be applied and optionally to be removed, can bring other issues such as bad adhesion or increased haze level.

US 8,740,996 B2 is directed to a method for coloring an optical lens comprising a printing primer, an optical colored lens comprising such a printing primer. This printing primer is composed of a binder of an aqueous dispersion of a polymer such as anionic polyurethanes and a hydrophilic inorganic colloid and a hydrophilic polymer. Such a layer is to be applied on at least one of the faces of a substrate of an optical lens. Subsequently, the printing primer composition is dried and forms a transparent printing primer film. Following this, ink is printed on the dried transparent printing primer film using an inkjet printing and the applied ink as dried. According to the teaching of US 8,740,996 B2, the presence of this primer layer allows to enhance the diffusion of printed ink into the binder layer and increase the absorption of printed inks into the binder layer. However, regarding the achievable maximum color density, transparency of printed lens and quality issues, this work does not provide any information.

US 2018/0050549 A1 is directed to a method for coloring an optical element in a non-uniform linear pattern with one or more photochromic inks with predefined patterns. The photochromic inks include thermally reversible photochromic compounds and non-thermally reversible photochromic compounds and mixtures thereof. According to the method of US 2018/0050549 A1, the photochromic composition is deposited on at least one surface of the optical element using an ink jet printing apparatus to provide a linear gradient color pattern on the optical elements upon exposure of the optical element to actinic radiation. During deposition of the colorant composition, levelling of the colorant composition is to be performed by vibrating the optical element. Following the exposure of the optical element to actinic radiation, the photochromic composition is dried on the surface of the optical element. However, US 2018/0050549 A1 is silent with respect to the optical quality issue such as haze level or resolution control when different inks are involved, from their mentioned process of tinting a spectacle lens substrate by ink jet printing and to simultaneously provide a tinted spectacle lens. Besides, the method of US 2018/0050549 A1 is disadvantageous in that an exposure of the optical element to actinic radiation is necessary directly after having provided a linear gradient color pattern on the optical element. Thus, when applying several linear gradient color patterns on the optical element, the step of exposing the optical element to actinic radiation is to be performed several times. Moreover, it is disadvantageous that levelling of the applied colorant composition is to be performed by vibrating the optical element, as this is a mechanical step to be performed separately, what is cumbersome, time consuming, error-prone, and costly.

US 10,310,151 B2 is directed to coated optical substrates having first and second groups of functional dots having different functionalities and micrometer height difference. A first group of the functional dots has a first composition and has a first photochromic functionality. A second group of the functional dots has a second composition and has a second functionality selected from a group consisting of an anti-scratch functionality and ultraviolet (UV) absorber functionality. In addition, the first group has a characteristic height H1 and the second group has a characteristic height H2, where H2 should exceed H1 by more than 5% and at least for 1 um. Between adjacent functional dots belonging to the first and second groups, a gap of at least 5 µm and at most 50 µm is provided. Following these features, this approach does not allow to provide a layer wherein the layer structure has a defined uniform thickness to avoid optical distortions as well as disturbances such as from light scattering from the surface of individual dots.

US 2021/0016529 A1 is directed to a method of manufacturing an ophthalmic lens having at least one filtering function. The method is directed to additively manufacture a matrix by depositing a plurality of predetermined volume elements of at least two compounds absorbing light having a wavelength from 280 to 2000 nm with respect to a determined transmission spectrum on a predetermined build support. This method mainly aims to provide a solution with barrier coating to enable that different colors can be printed together, especially when these dyes requiring matrix monomers are not compatible with each other. However, this method targets for printing a 3D lens which requires additional steps such as polishing after final printing. Moreover, US 2021/0016529 is not directed to a method of producing a tinted coating.

JP 5 082461 B2 is directed to a color lens and a method for manufacturing the same. US 2018/0095190 A1 is directed to an optical element having a coating for enhanced visibility of a mark and method for making the optical element. US 2020/0122487 A1 is directed to a system and method for coating a lens. US 2015/0277143 A1 is directed to a method for printing an ink jet marking on a surface.

It is an object of the invention to provide a method which allows to efficiently tint spectacle lenses with varied color depths and varied hues, and to minimize or overcome the process of inkjet printing induced optical quality issue, especially when different inks are involved in the process, such as drop-to-drop interface induced haze level increase and ink bleeding induced bad resolution. These process-induced issues might not not be critical in graphical industry printing or any color printing business for which the color generation is due to reflection. However, for ophthalmic industry, where the color generation is due to absorption and transmission, these issues are quite important, as high transparency, low level of scattering, free of surface roughness induced optical distortion, are critical quality parameters for eyewear lens products.

Moreover, it is also desirable to provide a cost-effective and time saving method of preparing a spectacle lens with a color gradient or random distribution of colors wherein a color composition can be applied in a controlled and predetermined manner to a surface of a spectacle lens substrate.

The object of the invention is solved by providing an ink jet printing method of tinting a spectacle lens substrate according to claim 1 comprising the steps:
(a) providing a spectacle lens substrate having a front surface and a back surface, wherein said spectacle lens substrate can be precoated,
(b) printing droplets of at least a first inkjet printing ink (PI1) to form at least a first layer (L1) and printing droplets of at least a second inkjet printing ink (PI2) to form at least a second layer (L2) on at least one of said front surface and back surface,
   wherein at least one of said at least first inkjet printing ink (PI1) and said at least second inkjet printing ink (PI2) is colored,
   said at least first layer (L1) and said at least second layer (L2), each covering fully or partially at least one of said front surface and back surface, forming a stack which covers at least one of said front surface and back surface, wherein said at least first layer (L1) and said at least second layer (L2) are at least partially overlapping in said stack,
(c) curing said at least first layer (L1) and said at least second layer (L2) together in a combined curing step, wherein droplets of said at least first inkjet printing ink (PI1)) and droplets of said at least second inkjet printing ink (PI2) being in physical contact with each other are at least partially coalescing before curing.

Preferred embodiments of the method are specified in dependent claims 2 to 5.

The object of the invention is also solved by providing computer-implemented method of digitally designing a tinted spectacle lens for the purpose of a use of the digital design for a manufacture of said tinted spectacle lens by inkjet printing; said computer-implemented method according to claim 6 comprises the steps of:
(a) positioning droplets and calculating a number of droplets of at least a first inkjet printing ink (PI1), to form at least a first layer (L1), and positioning droplets and calculating a number of droplets of at least a second inkjet printing ink (PI2), to form at least a second layer (L2), on at least one of a front surface and back surface of a spectacle lens substrate, such said at least first layer (L1) and said at least second layer (L2) each covers fully or partially the respective surface, said at least first layer (L1) and said at least second layer (L2) forming a stack, wherein said at least first layer (L1) and said at least second layer (L2) are at least partially overlapping, wherein droplets of said at least first inkjet printing ink (PI1)) and droplets of said at least second inkjet printing ink (PI2) being in physical contact with each other are at least partially coalescing before curing, such that the obtained stack matches the digital design of the tinted spectacle lens and that the stack has a uniform thickness.

The object of the invention is also solved by providing a tinted spectacle lens having a front surface and a back surface according to anyone of claims 1 to 5, wherein said tinted spectacle lens comprises a color design on at least one of said front surface and back surface, said color design is selected from the group consisting of a non-linear color gradient, contoured di- or polychromatic pattern, contoured di- or polychromatic figure, di- or polychromatic alphabetic code, di- or polychromatic numerical code, di- or polychromatic alphanumerical code, and combinations thereof.

Herein, the term "spectacle lens substrate" means an organic or mineral glass spectacle lens substrate, comprising a spectacle lens substrate which may be precoated with one or more coatings of various natures. Preferably the spectacle lens substrate is an organic glass spectacle lens substrate.

The spectacle lens substrate is preferably based on an optical material, wherein the optical material is defined according to section 3.3.1 of DIN EN ISO 13666:2019-12 as transparent material capable of being manufactured into optical components. The spectacle lens substrate may be made of mineral glass according to section 3.3.1 of DIN EN ISO 13666:2019-12 and/or of an organic hard resin such as a thermosetting hard resin according to section 3.3.3 of DIN EN ISO 13666:2019-12; a thermoplastic hard resin according to section 3.3.4 of DIN EN ISO 13666:2019-12; or a photochromic material according to section 3.3.5 of DIN EN ISO 13666:2019-12.

In a spectacle lens substrate or a spectacle lens, the front surface is usually convex and, if worn by a user, according to DIN EN ISO 13666:2019-12, facing away from the eye. The back surface is usually concave, and, if worn by a user, DIN EN ISO 13666:2019-12, facing to the eye.

For purposes of this invention, the bottom of the spectacle lens is closest to the lens wearer's cheekbone, and the top of the spectacle lens is closest to the forehead of the wearer of the lens or spectacle.

The term "spectacle lens substrate" as used in the present invention means a spectacle lens substrate having a lens shape, such as, for example, a biconvex spectacle lens, a biconcave spectacle lens, a convex-concave spectacle lens, a concave-convex spectacle lens, a plano-convex spectacle lens, and/or a plano-concave spectacle lens.

Non-limiting examples of spectacle lens substrates include corrective and non-corrective spectacle lenses, including single vision or multi-vision spectacle lenses, which may be either segmented or non-segmented multi-vision spectacle lenses, such as, but not limited to, bifocal lenses, trifocal spectacle lenses, and progressive spectacle lenses, as well as protective spectacle lenses.

The term "spectacle lens substrate" as used in the present invention means a spectacle lens body to be tinted. The spectacle lens substrate can be precoated or can have been precoated, for example, with an undercoating, such as, for example an adhesion promoting primer layer.

According to a preferred embodiment of the invention the precoat is not used as an ink-reception layer.

Furthermore, functional layers, such as, for example, hard coat, adhesive layer, anti-reflection coating, anti-UV light layer, clean coat, and/or anti-fog coat, etc. can be applied to the tinted spectacle lens substrate, i.e., over the colored layer(s) deposited via inkjet printing according to the present invention, to provide a tinted spectacle lens, which can then be contoured to fit, for example, into a spectacle frame.

The spectacle lens substrate can comprise any of the optical substrates, preferably so-called organic glass, which are well known in the art. Preferably, the spectacle lens substrate suitable for use in the in the present invention typically has a refractive index of at least 1.50, such as, for example, of about 1.55, about 1.6, about 1.67, about 1.74, or about 1.76 and can also include non-plastic substrates, such as mineral glass.

According to a preferred aspect of the invention, the organic glass is selected from the group consisting of polyallyl diglycole carbonate, polyurea, polyurethane, polycarbonate, polythiourethane, polyepisulfide, polyacrylate, polymethacrylate, polyamide, and mixtures thereof.

The organic glass can be either thermoplastic materials such as polycarbonates and thermoplastic polyurethanes or thermosetting (cross-linked) materials such as diethylene glycol bis(allylcarbonate)polymers and copolymers, thermosetting polyurethanes, polythiourethanes, polyepoxides, polyepisulfides, poly(meth)acrylates and copolymers based substrates, such as substrates comprising (meth)acrylic polymers and copolymers derived from bisphenol-A, polythio(meth)acrylates, as well as copolymers thereof and blends thereof.

Further preferably, the spectacle lens substrate is selected from the group consisting of diethylene glycol bis(allylcarbonate)polymers and polythiourethane based polymers.

The polymeric organic material of the spectacle lens substrate can also be chosen from poly(C₁-C₁₂ alkyl methacrylates), poly(oxyalkylene dimethacrylates), poly(alkoxylated phenol methacrylates), cellulose acetate, cellulose triacetate, cellulose acetate propionate, cellulose acetate butyrate, poly(vinyl acetate), poly(vinyl alcohol), poly(vinyl chloride), poly(vinylidene chloride), thermoplastic polycarbonates, polyesters, polyurethanes, polythiourethanes, polysulfithiourethanes, poly(urea-urethane), poly(ethylene terephthalate), polystyrene, poly(alpha methylstyrene), copoly(styrene-methylmethacrylate), copoly(styreneacrylonitrile), polyvinyl butyral or polymers prepared from bis(allyl carbonate) monomers, polyfunctional acrylate monomers, polyfunctional methacrylate monomers, diethylene glycol dimethacrylate monomers, diisopropenyl benzene monomers, ethoxylated bisphenol A dimethacrylate monomers, ethylene glycol bismethacrylate monomers, poly(ethylene glycol) bismethacrylate monomers, ethoxylated phenol bismethacrylate monomers, alkoxylated polyhydric alcohol polyacrylate monomers, styrene monomers, urethane acrylate monomers, glycidyl acrylate monomers, glycidyl methacrylate monomers, diallylidene pentaerythritol monomers, or mixtures of such monomers.

Preferably, the spectacle lens substrate used in the present invention includes polyol(allyl carbonate) monomers, e.g., allyl diglycol carbonates such as diethylene glycol bis(allyl carbonate; poly(urea)urethane polymers, which are prepared, for example, by the reaction of a polyurethane prepolymer and a diamine curing agent, a composition for one such polymer being sold under the registered trademark TRIVEX by PPG Industries, Inc.; polyol(meth)acryloyl terminated carbonate monomer; diethylene glycol dimethacrylate monomers; ethoxylated phenol methacrylate monomers; diisopropenyl benzene monomers; ethoxylated trimethylol propane triacrylate monomers; ethylene glycol bismethacrylate monomers; poly(ethylene glycol) bismethacrylate monomers; urethane acrylate monomers; poly(ethoxylated bisphenol A dimethacrylate); poly(vinyl acetate); poly(vinyl alcohol); poly(vinyl chloride); poly(vinylidene chloride); polyethylene; polypropylene; polyurethanes; polythiourethanes; thermoplastic polycarbonates, such as the carbonate-linked resin derived from bisphenol A and phosgene, one such material being sold under the registered trademark LEXAN by Sabic Global Technologies; polyesters, such as the material sold under the registered trademark MYLAR by Dupont Teijin Films; poly(ethylene terephthalate); polyvinyl butyral; poly(methyl methacrylate), such as the material sold under the registered trademark PLEXIGLAS by Arkema France Corporation, and polymers prepared by reacting polyfunctional isocyanates with polythiols or polyepisulfide monomers, either homopolymerized or co- and/or terpolymerized with polythiols, polyisocyanates, polyisothiocyanates, and, optionally, ethylenically unsaturated monomers or halogenated aromatic containing vinyl monomers. Also contemplated are copolymers of such monomers and blends of the described polymers and copolymers with other polymers, e.g., to form interpenetrating network products.

Preferably, the spectacle lens substrate is based on at least one of the optical materials mentioned in the following table.

**Table: Examples of optical materials**

| Trade name | Optical material | Average refractive index n_{D*} | Abbe number v_{D*} |
|---|---|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) | 1.500 | 56 |
| RAVolution | Polyurea / Polyurethane | 1.500 | 54 |
| Trivex | Polyurea / Polyurethane | 1.530 | 45 |
| Panlite, Lexan, Makrolon | Polycarbonate (PC) | 1.590 | 29 |
| MR-6 | Polythiourethane | 1.598 | |
| MR-8 | Polythiourethane | 1.598 | 41 |
| MR-7 | Polythiourethane | 1.664 | 32 |
| MR-10 | Polythiourethane | 1.666 | 32 |
| MR-174 | Polyepisulfide | 1.738 | 32 |
| MGC 1.76 | Polyepisulfide | 1.76 | 30 |
| Spectralite | Urethane / Methacrylate | 1.54 | 47 |
| PA | polyamide | 1.50 | 52 |

The inkjet printing ink used for tinting the spectacle lens substrate can contain any conventional coloring matter(s) such as dye(s) and pigment(s). For example, the coloring matter can be able to absorb radiation in the UV range of, for example, 100 nm to 400 nm, such as 280 nm to 380 nm, in the visible range of, for example, 380 nm to 780 nm, and/or in the infrared range of, for example, 780 nm to 1 mm.

The dye(s) used in the inkjet printing ink can also be photochromic and/or thermochromic dye(s). According to a preferred embodiment of the invention the dye(s) used in the inkjet printing ink(s) are selected from textile dye(s). These dyes show a high level of transparency, good compatibility with the matrix monomer system, stable against thermal and UV illumation, and environmentally safe. The colors or hue can be selected from the group consisting of, for example, YELLOW, RED, BLUE, CYAN, ORANGE, MAGENTA, and mixtures thereof. However, it should be understood that also other colors can be used and that the invention is not to be construed to be limited to the colors of the group consisting of YELLOW, RED, BLUE, CYAN, ORANGE, MAGENTA and mixtures thereof.

As yellow coloring matter, color Index number (hereinafter referred to as C.I. number): solvent yellow 33, solvent yellow 56, solvent yellow 93, solvent yellow 104, solvent yellow 72, solvent yellow 179, disperse yellow 42, disperse yellow 86, pigment yellow 74, solvent yellow 81, solvent yellow 82, solvent yellow 162 and mixtures thereof can be used.

As red coloring matter, for example, C.I. Numbers: solvent red 1, solvent red 24, solvent red 179, disperse red 54, acid red 18, acid red 27, disperse red 9, solvent red 52, solvent red 49, vat red 41, solvent red 169, solvent red 130, solvent red 160, solvent red 119, solvent red 122, solvent red 125, solvent red 19, solvent red 27, solvent red 8 and mixtures thereof can be used.

As blue coloring matter, for example, C.I. Numbers: solvent blue 35, solvent blue 36, solvent blue 104, solvent blue 83, disperse blue 27, disperse blue 56, disperse blue 80, solvent blue 97, solvent blue 102, solvent blue 45, solvent blue 59, basic blue 17, solvent blue 122 and mixtures thereof can be used.

As cyan coloring matter, for example, C.I. Numbers: solvent blue 67, solvent blue 70 and mixtures thereof can be used.

As orange coloring matter, for example, C.I. Numbers ORANGE solvent orange 56, solvent orange 99, solvent orange 54, solvent red 245, solvent orange 272, solvent orange 247, solvent orange 251 and mixtures thereof can be used .

As magenta coloring matter, for example, C.I. Numbers MAGENTA solvent red 127, solvent red 52 and mixtures thereof can be used.

Of course, also mixtures of two or more of the color matters can be used in the present invention, which enables to create a great deal of hues.

The term "hue" as used herein means a color expressed, for example, in terms such as "YELLOW", "RED", "BLUE", "CYAN", "ORANGE", "MAGENTA" etc. or mixtures thereof.

The term "color density" as used herein means the optical density of an area of the spectacle lens substrate printed with the inkjet printing ink. A higher color density results in a lower percent light transmittance.

Preferably, the amount of color matter(s) in the inkjet printing ink is in a range of 0.05 to 4 wt.-%, preferably of 0.1 to 3 wt.-%, further preferably of 0.2 to 2 wt.-%, each based on the total weight of the inkjet printing ink.

It is also possible to use pigments as coloring matter(s) in the inkjet printing. Preferably, the pigments have a particle size of below 200 nm, preferably of below 150 nm, further preferably of about 100 nm. The particle size is the median particle size. It is preferred that the median particle size is below 200 nm in order to avoid any scattering of incident light at these particles. Thus, the median particle size can be within a range of about 25 nm to 200 nm, preferably of about 50 nm to 150 nm. The lower the median size and the narrower the size distribution, the better for ink formulation.

According to a preferred embodiment of the invention 95 %, preferably 99 %, of the number of pigment particles have a particle size of less than 200 nm, preferably less than 180 nm, further preferably less than 150 nm.

Preferably, the coloring matter is a soluble dye, as a soluble dye is not able to scatter incident light in contrast to particulate pigments.

Of course, other dye(s) and/or pigment(s) and/or mixtures(s) thereof can be appropriately selected in order to achieve the desired color effect in the spectacle lens substrate to be tinted.

The inkjet printing ink used in the present invention can also comprise photochromic compounds as coloring matter.

Photochromic compounds useful in the present invention comprise at least one photochromic compound selected from the group consisting of pyrans, azobenzenes, spiropyrans, oxazines, spiroxazines, fulgides, fulgimides, metallic dithizonates, diarylethenes, and mixtures thereof. Specific but non-limiting examples of suitable photochromic materials can include indeno-fused naphthopyrans, naphtho[1,2-b]pyrans, naphtho[2,1-b]pyrans, spirofluoroeno[1,2b]pyrans, phenanthropyrans, quinolinopyrans, fluoroanthenopyrans, spiropyrans, benzoxazines, naphthoxazines, spiro(indoline)naphthoxazines, spiro(indoline)pyridobenzoxazines, spiro(indoline)fluoroanthenoxazines, spiro(indoline)quinoxazines, fulgides, fulgimides, diarylethenes, diarylalkylethenes, and diarylalkenylethenes.

The inkjet printing ink used in the present invention can comprise a single coloring matter or a combination of two, three, four, five or more coloring matters, as explained above.

Preferably, two or more inkjet printing inks comprising each coloring matter, preferably dye(s), of different hue and/or color density are used.

It is preferred that at least a first colored inkjet printing ink and at least a second color inkjet printing ink are used in the inkjet printing method of the present invention which are different from each other in terms of the coloring matter, preferably dye(s), incorporated, for example with respect to hue and/or color density.

It is furthermore preferred that at least a first colored inkjet printing ink and at least a second color inkjet printing ink and at least a third inkjet printing ink are used in the inkjet printing method of the present invention which are different from each other in terms of coloring matter, preferably dye(s), incorporated, for example with respect to hue and/or color density.

It is furthermore preferred that at least a first colored inkjet printing ink and at least a second color inkjet printing ink and at least a third inkjet printing ink and at least a fourth colored inkjet printing ink are used in the inkjet printing method of the present invention which are different from each other in terms of coloring matter, preferably dye(s), incorporated, for example with respect to hue and/or color density.

It is furthermore preferred that at least a first colored inkjet printing ink and at least a second color inkjet printing ink and at least a third inkjet printing ink and at least a fourth colored inkjet printing ink and at least a fifth inkjet printing ink are used in the inkjet printing method of the present invention which are different from each other in terms of coloring matter, preferably dye(s), incorporated r, for example with respect to hue and/or color density.

Additionally, the inkjet printing ink used in the present invention can comprise organic solvent(s) and/or water. According to a preferred embodiment the solvent is water or an aqueous organic solvent.

Furthermore, the inkjet printing ink used in the present invention can also comprise monomer(s), oligomers, polymer(s), homopolymer(s), heteropolymer(s), copolymer(s) or a mixture thereof, which, preferably, can be cured, for example by irradiating with high energetic radiation, such as, for example, UV light, and/or heat.

In a preferred aspect an inkjet printing ink used in the present invention includes monomer(s) that can be polymerized to form a polymer using polymerization methods appropriate for a given monomer, mixtures thereof, or polymer(s), or mixtures thereof. Monomer(s) can also be used to decrease the viscosity of the inkjet printing ink. Alternatively, the inkjet printing ink can include polymer(s) such that the viscosity of the inkjet printing ink is increased. Alternatively, the ink can include polymer(s) and monomer(s). Appropriate concentration(s) of monomer(s) can be within a range of about 5 wt.-% and 99 wt.-%, preferably of about 25 wt.-% and about 85 wt.-%, and more preferably of about 50 wt.-% and about 75 wt.-%. Appropriate concentration(s) of polymer(s) can be within a range of about 0 wt.-% and about 50 wt.-%, preferably of about 5 wt.-% and about 25 wt.-%, and more preferably within a range of about 10 wt.-% and about 20 wt.-%. Generally, the indication "wt.-%" refers each to the total weight of the inkjet printing ink, unless otherwise specified.

The inkjet printing ink can also comprise one or more polymeric component(s). Examples of suitable polymeric component(s) can include, but are not limited to, the following polymer(s) or precursor(s) thereof: polyvinyl alcohol, polyvinyl chloride, polyurethane, polyacrylate, and polycaprolactam. Thus, the inkjet printing composition can be a thermoplastic composition or a thermosetting composition.

When monomer(s) and/or polymer(s) are mixed, the total concentration of monomer(s) and/or polymer(s) can be between about 10 wt.-% and about 99 wt.-%, preferably of about 25 wt.-% and about 85 wt.-% and more preferably of about 55 wt.-% and about 75 wt.-%.

The viscosity of the inkjet printing ink used in the present invention is preferably in a range of about 7 to 20 mPa*s, preferably of 8 to 18 mPa*s, further preferably of 9 to 15 mPa*s, further preferably of 10 to 12 mPa*s. The viscosity is the dynamic viscosity, measured at a temperature the same as printing process. The measurement was carried out with a Bohlin CVO/C-VOR Rheometer (Malvern Panalytical), equipped with a 60 mm cone at 2 degree and measured at a rotation speed of 1500 mm/S.

Agent(s) such as thickener(s), surfactant(s), or diluent(s), including appropriate solvent(s), can be used to adjust the viscosity and/or the surface tension of the inkjet printing ink.

An inkjet printing ink that can be used according to the present invention includes preferably at least one monomer which can also include a polymerization initiator, so that once the inkjet printing ink including preferably said at least one type of monomer is printed, polymerization of the at least one monomer in the inkjet printing ink is initiated. The number, type, and amount of initiator(s) is a matter of choice depending on the type of monomer or monomers in the inkjet printing ink. Appropriate initiators include, but are not limited to, UV initiators that initiate polymerization by UV irradiation or thermal initiators that initiate polymerization by thermal energy.

An inkjet printing ink can also include one or more additive(s) such as, for example, anti-microbial agent(s), anti-bacterial agent(s), antiseptic agent(s), anti-fungal agent(s), antioxidant(s), UV-light protection agent(s), dispersing agent(s), rheology additive(s) for flow and wetting, surfactant(s), evaporation retarding agent(s), etc. Usually, additive(s) can each be present in a range of 0 to 5 wt.-%, such as, for example, in a range of 0.1 to 2 wt.-%, further preferably of 0.1 to 1.0 wt.-%.

An ink jet printing method of tinting a spectacle lens according to the invention comprises the steps:
(a) providing a spectacle lens substrate having a front surface and a back surface, wherein said spectacle lens substrate can be precoated or can have been precoated,
(b) printing droplets of at least a first inkjet printing ink (PI1) to form at least a first layer (L1) and droplets of at least a second inkjet printing ink (PI2) to form at least a second layer (L2) on at least one of said front surface and back surface, wherein at least one of said at least first printing ink (PI1) and said at least second printing ink (PI2) is colored, said at least first layer (L1) and said at least second layer (L2), each covering fully or partially at least one of said front surface and back surface, forming a stack which covers at least one of said front surface and back surface, wherein said at least first layer (L1) and said at least second layer (L2) are at least partially overlapping in said stack,
(c) curing said at least first layer (L1) and said at least second layer (L2) together in a combined curing step.

The present invention allows to produce a tinted spectacle lens in a uniform manner, i.e., a homogeneously tinted spectacle lens. In order to obtain a desired color or hue and/or a desired color density, the respective color is preferably obtained by mixing drops of at least two inkjet printing inks having each a different color or hue and/or color density directly on one of the at least one front surface and back surface of the spectacle lens substrate.

According to the invention, said stack covering at least one of said front surface and said back surface of said spectacle lens substrate has a uniform thickness.

The term "uniform thickness" means that the thickness of the stack is smooth and does not contain unevenness or irregularities which, e.g., affect transmission or cause scattering of incident light for a user wearing a respective spectacle lens. Preferably, a "uniform thickness" means that the thickness variation is at most +/-1 µm.

Preferably, the thickness of the stack is within a range of 1 µm to 100 µm, further preferably of 10 µm to 80 µm, further preferably of 20 µm to 70 µm.

Preferably, the thickness variation is within a range of 10 nm to 1 µm, further preferably within a range of 50 nm to 500 nm, further preferably within a range of 100 nm to 300 nm. The thickness deviation is calculated from the measured thickness of the stack from position to position.

A stack can comprise at least one colored layer, for example two colored layers, three colored layers, four colored layers or more. Preferably, the outermost layer is a clear or colorless layer which can function as a compensation layer, as will be described below.

The thickness variation is measured by surface profilometer (Surfcom 3DF, surface texture measuring Instrument, ACCRETECH, Japan). The measurement is done in a measurement range of 10 mm along the lens substrate, with a steel probe, loaded with 1mN force.

The optical properties of a spectacle lens coated with a stack of layers having uniform thickness, i.e., a stack of layers having a minimized thickness variation is significantly improved in terms of suppressing unevenness induced optical distortion.

The inkjet printing method of the present invention allows to print a defined number of drops of inkjet printing ink, having, for example, a first color or hue, to a specific position or specific area on a front surface and/or back surface of a spectacle lens substrate. Drops of a second inkjet printing ink having, for example, a second color or hue, can be printed to another specific position or another specific area on a front surface and/or back surface of a spectacle lens substrate. Likewise drops of a third or fourth inkjet printing ink can be printed to another specific position or another specific area on said front surface and/or back surface. The positions of the various printing inks can be identical and/or the areas can be partially and/or fully overlapping.

Depending on the desired color density or hue per specific position or specific area, the number of drops of inkjet printing ink is appropriately chosen. For example, the higher the color density, the more drops of inkjet printing ink can be printed to the specific position or specific area. The more drops are applied to a specific position or specific area, the higher will be the resulting layer thickness in the specific position or specific area.

However, in order to obtain a stack with a uniform thickness, the same number of drops per specific position or specific area needs to be applied across the respective surface.

The number of layers to be applied via the inkjet printing method of the invention is not limited. Thus, there can be only two layers which are at least partially overlapping or three layers, four layers, five layers, six layers or more layers, which can be printed in such a manner that some of the layers can overlap only partially, and other layers can overlap completely. Some of the layers may not overlap and may be arranged, for example in an abutting manner or in a spaced apart manner. However, at least two layers are always arranged in an at least partially overlapping manner.

According to another preferred embodiment of the inkjet printing method of the present invention, one of said at least first inkjet printing ink (PI1) and of said at least second inkjet printing ink (PI2) is a clear inkjet printing ink.

According to another preferred embodiment of the inkjet printing method said at least first inkjet printing ink is colored and said at least second inkjet printing ink (PI2) is a clear inkjet printing ink which is printed over said first inkjet printing ink (PI1) to compensate variations in the thickness of the at least first layer (L1) to such an extent to provide a stack with a uniform thickness.

Preferably the clear inkjet printing ink is used on top of the stack to act as a compensation layer (CL) to compensate varying heights in the underlying colored or optionally also colorless layer(s). Thus, preferably the varying heights are filled with clear inkjet printing ink to obtain stack of layers, wherein the stack has a uniform thickness, preferably a thickness with the above indicated thickness variation. The term "clear" is used in the meaning of "colorless".

It is to be noted that this compensation layer generated from clear inkjet printing ink is important to obtain high quality optical properties of the stack. The clear inkjet printing ink has basically the same composition as the colored inkjet printing inks, however without any color matter(s), such as dye(s) or pigment(s).

According to another preferred embodiment of the invention the inkjet printing method comprises the steps:
(a) printing at least a first colored layer (L1) on at least one of said front surface and back surface to partially or fully coat the respective surface,
(b) printing at least a second colored layer (L2) on said at least one of said front surface and back surface, coated fully or partially with said first colored layer (L1), to partially or fully coat the respective surface,
(c) printing a clear layer on said at least one of said front surface and back surface coated fully or partially with said first colored layer (L1) and said second colored layer (L2) to compensate variations in the thickness of the at least first layer (L1) and the at least second layer (L2) to such an extent to provide a stack having a thickness with a uniform thickness.

The method of the present invention thus allows to design specifically a color appearance, for example, in terms of color density and/or hue of a spectacle lens substrate or spectacle lens, without or with minimized optical distortion via the introducing a compensation layer.

According to another aspect of the inkjet printing ink method of the present invention droplets of said at least first inkjet printing ink (PI1) and droplets of said at least second inkjet printing ink (PI2) being in physical contact with each other are at least partially, preferably fully, coalescing before curing. This will ensure the interface between adjacent drops disappear and light scattering will be avoided. Therefore, after curing, the printed layer will be highly transparent.

Additionally, this also allows to print droplets of, for example, of two or more inkjet printing inks having each a different color, for example RED and BLUE, on the same side of a front surface or back surface of a spectacle lens in such a way that the drops will be in physical contact on the respective surface, for example side-by-side or on top of each other, and this coalesce creating a desired color, for example PINK. If, for example, a drop of an inkjet printing having the color BLUE and a drop of an inkjet printing ink having the color YELLOW coalesce due to physical contact with each other on the respective surface of a spectacle lens substrate, then the color GREEN is created on the respective surface.

Phrased differently, the method of the invention allows mixing of various inkjet printing inks, having for example a different color density or different hue, on a surface, for example on a front surface and/or back surface of a spectacle lens substrate, prior to curing. Thus, the method of the present invention allows an in-situ mixing of droplets of inkjet printing inks directly on the respective surface of the spectacle lens substrate to generate, for example, a desired color density, a specific hue, etc. directly at a specific position or a specific area on the surface of the spectacle lens. Meanwhile, because of sufficient coalescence and diffusion between adjacent drops, no sharp interface exists, and the high transparency of the printed layer can be maintained.

Additionally, a premixing of color matters, such as dyes, in order to tint a spectacle lens substrate with a desired hue and/or color density is not necessary anymore. This allows to efficiently tint spectacle lens substrates with different color properties in one production line without premixing color matters. Moreover, a cumbersome tinting of spectacle lens substrates using various dye baths and exposing workers to possibly hazardous substances is not necessary anymore. This is a significant progress in tinting spectacle lens substrates.

It is an important aspect of the present invention that the curing step is not performed stepwise after each printing step of printing drops of a specific inkjet printing ink before the next drops of another inkjet printing ink are printed, but that drops of the various inkjet printing inks, being colored or colorless or clear, are all printed together or one after the other, and after having performed the printing steps, a combined curing step is performed.

According to a preferred embodiment of the invention, the spectacle lens substrate is neither precoated nor coated with a porous layer such as a porous ink reception layer. The spectacle lens substrate used in the present invention can be precoated or can have been precoated with at least one primer layer, preferably one primer layer. This at least one primer layer is colorless. This primer layer can be an adhesion promoting layer. Moreover, this primer layer does not cause coloring matter, such as dye(s) or pigment(s,) to diffuse into the spectacle lens substrate. That is to say, a primer layer used in the present invention may have the function to improve adherence of the printed inkjet printing ink(s) to the spectacle lens substrate via said primer layer.

Another ink jet printing method comprises the following steps:
(a) providing a spectacle lens substrate having a front surface and a back surface, wherein said spectacle lens substrate can be precoated or can have been precoated,
(aa) printing droplets of a base coat material (BCM) having a surface tension σ_{BCM} on at least one of said front surface and back surface to form a base coat (BC) covering the respective surface,
(b) printing droplets of at least a first inkjet printing ink (PI1) having a surface tension σ_{PI1} to form at least a first layer (L1) and droplets of at least a second inkjet printing ink (PI2) having a surface tension σ_{PI2} to form at least a second layer (L2) on said base coat (BC),
   said surface tension σ_{BCM} is lower than said surface tension σ_{PL1} and said surface tension σ_{PI2}, respectively,
   wherein said base coat (BC) is a clear coat and wherein at least one of said at least first inkjet printing ink (PI1) and said at least second inkjet printing ink (PI2) is colored,
   said base coat (BC), said at least first layer (L1) and said at least second layer (L2) forming a stack, which covers at least one of said front surface and back surface, wherein said at least first layer (L1) and said at least second layer (L2), each covering fully or partially the respective surface, are in abutting contact with each other and/or spaced apart from each other and/or at least partially overlapping in said stack,
(c) curing said base coat (BC), said at least first layer (L1) and said at least second layer (L2) together in a combined curing step.

Preferably, said base coat (BC) fully covers the respective surface of the front surface and/or back surface of the spectacle lens substrate. The base coat (BL) can also be designated base layer. The presence of the base coat here is to slow down the ink bleeding and ink diffusion of colored drops along the lens substrate, to provide a better contrast for printed image comparing directly printed colored inks on lens substrate. The stack preferably has the same dimension as the base coat and preferably fully covers the respective surface of the front surface and/or back surface of the spectacle lens substrate.

Comparing with the lens substrate which possesses surface energy generally above 60mN/m, the non-cured base coat layer has a surface energy closer to the formulated colored inks. The presence of a non-cured base coat layer lowers the surface energy of the lens substrate, and thus, reduces the surface energy difference between substrate and the printed ink drops. Subsequentially, this will reduce the drive force of the ink drops to 'spread' over the lens substrate. Therefore, comparing with printing directly on a surface of lens substrates, the colored printed drops stay relative as they are deposited, and the printed pattern shown as better contrast and better resolution control.

This allows, for example, to print drops of at least a first inkjet printing ink having, for example, a first color in abutting contact with drops of at least a second printing ink having a second color such that, for the naked eye, no blurring between the two colors is visible. If the first printing ink is colored, the second printing ink can be colored or also colorless, for example.

The inkjet printing method of the present invention allows to print a defined number of drops of inkjet printing ink, having, for example, a first color or hue, to a specific position or specific area on a front surface and/or back surface of a spectacle lens substrate. Drops of a second inkjet printing ink having, for example, a second color or hue, can be printed to another specific position or another specific area on the same front surface and/or back surface of a spectacle lens substrate. Likewise drops of a third or fourth inkjet printing ink can be printed to another specific position or another specific area on said front surface and/or back surface. The positions of the various printing inks can be identical and/or the areas can be partially and/or fully overlapping.

Depending on the desired color density and/or hue per specific position or specific area, the number of drops of inkjet printing ink is appropriately chosen. For example, the higher the color density, the more drops of inkjet printing ink can be printed to the specific position or specific area. The more drops are applied to a specific position or specific area, the higher will be the resulting layer thickness in the specific position or specific area.

However, in order to obtain a stack with a uniform thickness, the same number of drops per specific position or specific area needs to be applied across the respective surface. Thus, if, for example, a color gradient, for example a contoured color gradient of a first inkjet printing ink having a first color is to be applied, then a respective fill-up to the defined stack thickness has to be performed with another, for example, a second inkjet printing ink being for example colorless or clear, up to the defined stack thickness with a uniform thickness, preferably a thickness within the indicated variation.

The number of layers to be applied via this inkjet printing method of the invention on the base coat is not limited. Thus, there can be only two layers printed on the base coat or there can be three, four, five, six, or more layers. Said at least first layer (L1) and said at least second layer (L2), printed on the base coat, can each be covering fully or partially the respective surface, and can be in abutting contact with each other and/or spaced apart from each other and/or at least partially overlapping in said stack.

Said three layers, four layers, five layers, six layers or more layers, which can also be printed in such a manner that some of the layers can overlap only partially, and other layers can overlap completely. Some of the layers may not overlap and may be arranged, for example in an abutting manner or in a spaced apart manner.

For example, it is possible, to print drops of two or more inkjet printing inks, having different colors each and/or different color density and/or one of the two or more inkjet printing inks is colorless, in the same level of a layer, for example, in a contoured form, for example in the form of stripes, having each different color and/or a different color density or being colorless, and to overly the stripe pattern with another inkjet printing ink to fill-up or to compensate the varying heights of drops of inkjet printing ink(s) printed at specific position(s) or specific area(s) on the front surface or back surface of the spectacle lens substrate to obtain a stack of layers having a uniform thickness, preferably with a thickness variation within the indicated ranges.

According to a preferred aspect of the inkjet printing method of the invention said stack covering least one of said front surface and said back surface of said spectacle lens substrate has a uniform thickness with a uniform thickness, preferably with a thickness variation as indicated above.

Preferably, the thickness of the stack having a uniform thickness within a range of 1 µm to 100 µm, further preferably of 10 µm to 80 µm, further preferably of 20 µm to 70 µm.

Preferably, the thickness variation is within a range of 10 nm to 1 µm, further preferably within a range of 50 nm to 500 nm, further preferably within a range of 100 nm to 300 nm.

The optical properties of a spectacle lens coated with the specified stack of layers are significantly improved in terms of suppression of optical distortion if the stack has a uniform thickness, wherein the thickness variation is minimized along the lens substrate.

According to a preferred aspect of the inkjet printing method of the invention one of said at least first inkjet printing ink (PI1) and of said at least second inkjet printing ink (PI2) is a clear inkjet printing ink.

According to a preferred aspect of the inkjet printing method of the invention said at least first inkjet printing ink is colored and said at least second inkjet printing ink (PI2) is a clear inkjet printing ink which is printed over said at least first inkjet printing ink (PI1) to such an extent to provide said stack having a uniform thickness.

Preferably, the clear inkjet printing ink is used on top of the stack to act as a compensation layer to compensate varying heights in the underlying colored and optionally also colorless layer(s).

Thus, preferably the varying heights are filled up with clear inkjet printing ink to obtain stack of layers, wherein the stack has a uniform thickness.

The term "clear" is used in the meaning of "colorless". It is to be noted that this compensation layer of clear inkjet printing ink is important to obtain high quality optical properties of the stack. The clear inkjet printing ink has basically the same composition as the colored inkjet printing inks, however without any color matter(s), such as dye(s) or pigment(s).

According to an aspect of an inkjet printing method the method comprises the steps:
(a) printing at least a first colored layer (L1) on said base coat (BC) to partially or fully coat said base coat (BC),
(b) printing at least a second colored layer (L2) on said base coat (BC), coated fully or partially with said at least first colored layer (L1), to partially or fully coat the respective surface,
(c) printing a clear layer on said base coat (BC), coated fully or partially with said at least first colored layer (L1) and said at least second colored layer (L2), to such an extent to provide a stack having a uniform thickness.

According to a preferred aspect of the inkjet printing method of the invention, wherein spread of droplets of said at least first inkjet printing ink (PI1)) and droplets of said at least second inkjet printing ink (PI2) on the lens substrate is reduced, which will minimize the 'blurriness' of the printed pattern and increase image contrast.

As the chemical composition of the various ink formulations is preferably identical or highly similar, apart from the added dyes or pigments, coalescence of neighboring inkjet printing ink drops is still guaranteed when drops are positioned next to each other or on top of each other. This will ensure a sufficient merge of neighboring drops, such that, the interface(s) between adjacent drops disappear and light scattering will be avoided after curing.

Additionally, it is an advantage for production, using the method of the present invention that the curing step is not performed stepwise after each printing step of printing drops of a specific inkjet printing ink before the next drops of another inkjet printing ink are printed, but that drops of the various inkjet printing inks, being colored or colorless or clear, are all printed together or one after the other, and after having performed the printing steps, a combined curing step is performed.

In step (aa) droplets of a base coat material (BCM) having a surface tension σ_{BCM} are printed on at least one of said front surface and back surface to form a base coat (BC) covering the respective surface. Preferably the base coat fully covers the respective surface, i.e., at least one of said front surface and back surface of the spectacle lens substrate.

The surface tension σ_{BCM} is lower than the surface tension σ_{PI1} of the at least first inkjet printing ink (PI1) and of the surface tension σ_{PI2} of the at least second inkjet printing ink, respectively. The base coat (BC) is printed on the, preferably complete, front surface and/or back surface of the spectacle lens substrate, which can be precoated or can have been precoated with one or more layers, for example an undercoating and/or a primer layer, below the base coat. The undercoating is, as explained above, preferably not a porous layer such as, for example, a porous ink reception layer. The undercoating is already cured or dried before the method of the invention is performed.

Preferably, the surface tension σ_{BCM} of the base coat material is at least 2 mN/m lower than each of the surface tension σ_{PI1} of the at least first printing ink (PI1) and the surface tension σ_{PI2} of the at least second printing ink (PI2), respectively. According to another preferred embodiment, the surface tension σ_{BCM} of the base coat material is at least 2 mN/m, further preferably at least 4mN/m, further preferably at least 10 mN/m, lower than each of the surface tension σ_{PI1} of the at least first printing ink (PI1) and the surface tension σ_{PI2} of the at least second printing ink (PI2), respectively.

According to another preferred embodiment, the surface tension σ_{BCM} of the base coat material is lower than each of the surface tension σ_{PI1} of the at least first printing ink (PI1) and the surface tension σ_{PI2} of the at least second printing ink (PI2), respectively, wherein the difference in the surface tension between σ_{BCM} and each of the surface tension σ_{PI1}, σ_{PI2}, σ_{PI3}, σ_{PI4} , etc. of the printing inks PI1, PI2, PI3, PI4, etc. is within a range of 2 to 10 mN/m, preferably within a range of 3 to 8 mN/m, further preferably within a range of 2 to 4 mN/m.

The surface tension of the colored inkjet printing ink(s) is preferably in a range of 20 to 40 mN/m, preferably of 25 to 35 mN/m, further preferably of 28 to 32 mN/m, further.

The surface energy of lens substrate is measured by sessile drop method with Krüss MSA (surface mobile analyzer, Krüss, Germany), with de-ionized water and diiodomethane as polar and non-polar test liquids. The surface tension of printing inks is measured by pendent drop method, via OCA 15CE of DataPhysics Instruments GmbH, Germany.

The surface tension is the attractive force of molecules present at the surface of a liquid towards each other of that liquid, which is a printing ink in the present invention. The surface energy is the equivalent attractive force present between the molecules at the surface of a solid substance. Thus, if the printing ink or base coat material (clear printing ink) is applied on the spectacle lens substrate, the surface energy is to be determined. If the printing ink or the base coat material (clear printing ink) is not yet applied to the spectacle lens substrate surface, then the surface tension is to be determined at the surface of the liquid, i.e., printing ink or base coat material.

The viscosity of the base coat material (BCM) and of any of the inkjet printing inks PI1, PI2, PI3, PI4, etc. are preferably within a range of 7 mPa*s to 20 mPa*s, further preferably of 8 mPa*s to 18 mPa*s, further preferably of 9 mPa*s to 15 mPa*s, further preferably of 10 mPa*s to 12 mPa*s.

The viscosity is the dynamic viscosity, measured at a temperature the same as printing process. The measurement was carried out with Bohlin CVO/C-VOR Rheometer (Malvern Panalytical), equipped with a 60 mm cone at 2 degree and measured at a rotation speed of 1500 mm/S.

Preferably, the amount of color matter(s) in the inkjet printing ink is in arrange of 0.05 to 5 wt.-%, preferably of 0.1 to 3 wt.-%, further preferably of 0.5 to 3 wt.-%.

Agent(s) such as thickener(s), surfactant(s), or diluent(s), including appropriate solvent(s), can be used to adjust the viscosity of the inkjet printing ink.

It is to be noted and important that the droplets of base coat material printed on the spectacle lens substrate to provide the base coat (BC), also named base layer, are still uncured. Droplets of the at least first inkjet printing ink (PI1) are then printed to form at least a first layer (L1) and droplets of the at least second printing ink (PI2) are then printed to form at least a second layer (L2) on said uncured base coat. The at least one first layer and the at least one second layer can then be printed in such a way on the uncured base coat that the at least first layer (L1) and the at least second layer (L2) are in abutting contact with each other and/or spaced apart from each other and/or at least partially overlapping in said stack.

Comparing with the lens substrate which possesses surface energy generally above 60mN/m, the non-cured base coat layer has a surface energy closer to the formulated colored inks. The presence of a non-cured base coat layer reduces the surface energy difference between substrate and the printed ink drops. As a result of this, the drive force of the ink drops to 'spread' over the lens substrate is reduced. Therefore, comparing with printing directly on lens substrates, the colored printed drops stay relative as they are deposited, and the printed pattern shown as better contrast and better resolution control.

Thus, this method of the invention allows to efficiently generate any color design which shows a relatively better contrast and better resolution compared to a method of printing directly on lens substrate without base coat. The color design can be of, for example, contoured pattern or visually discernible elements of, for example, at least two colors, such as, for example, dichromatic or polychromatic figures, dichromatic or polychromatic pictures, dichromatic or polychromatic symbols, dichromatic or polychromatic logos, dichromatic or polychromatic alphabetical codes, dichromatic or polychromatic numerical codes, dichromatic or polychromatic alphanumerical codes, etc., directly on the surface of a spectacle lens substrate. Once all layers are printed, the obtained stack of layers is cured in a combined curing step.

According to a preferred embodiment of the invention the printed dichromatic or polychromatic contours have an interference range between, for example, two abutting color areas of different colors, such as, for example, a first color of a first color area and a second color of a second color area, which is not visible for the naked eye. The term "interference range" means a range of overlap between two color areas which is due to diffusion of first coloring matter from a first color area into a second color area of a second color, and vice versa.

A visible interference range for the naked eye will be perceived as blurring with blurred boundaries. According to the invention, the boundaries between color areas are defined for the naked eye, i.e., are not perceived as blurred boundaries

Of course, a respective interference range is not limited to two abutting color areas, but can be also three, four, five or more abutting areas, wherein the interference range is as defined as explained above.

Moreover, this method of the invention allows to provide a non-linear gradient.

A non-linear gradient means a contoured gradient which does not have a gradient being constant along a horizontal line across the width of a spectacle lens, from top to bottom. In the prior art, a gradient is generated by dip coating wherein a spectacle lens substrate is repeatedly dipped into a dye bath with varying depth of immersion. As a result of this, the color density is always the same along a horizontal line across the width of the spectacle lens substrate. This is due to the always horizontal surface of the dye bath into which the spectacle lens substrate is repeatedly immersed in the prior art.

The present invention allows to provide a contoured color gradient which can be non-linear. For example, the color gradient can be created by printing the inkjet printing ink in a contoured manner, for example, a curved manner, for example in a semi-circular manner, or in a circular manner, for example, over and/or around an optical center of a spectacle lens substrate. The color gradient, for example, can follow the contour or shape of the spectacle lens substrate or the contour of the spectacle frame. Thus, the color density can be high in the upper part of the spectacle lens, which is used for distance viewing, and can have a lower color density in the lower part of the spectacle for near view wherein the color gradient can be contoured, for example, curved, for example, with a curvature which can match the contour of the lower part of the spectacle lens substrate or the contour of the spectacle frame into which the spectacle lens is to be mounted.

A non-linear color gradient, such as a contoured, for example, a curved color gradient, can also provide a functional advantage in that a spectacle lens substrate has a higher color density at the top of the lens for improved distance viewing with less color density at the bottom as well as at the lower right and lower left side of the spectacle lens substrate. Besides this functional aspect, this contoured design can have an aesthetic effect in terms of fashion and style. A non-linear color gradient according to the present invention means, for example, that the color density along a horizontal line across the spectacle lens or spectacle lens substrate can be varying.

Thus, according to a preferred embodiment of the invention, the spectacle lens substrate is tinted in a non-uniform linear pattern, such as a contoured gradient color pattern, for example, a curved gradient color pattern.

A non-linear gradient color pattern is achieved through the deposition of droplets of an inkjet printing ink via inkjet printing techniques according to the present invention, to create a contoured gradual, visually discernible variation, for example, in hue and/or color density on an area of the spectacle lens substrate coated with a base coat.

The gradual variation in hue and/or color density can occur across the surface of the spectacle lens substrate. The gradual variation in hue and/or color density can occur, for example, only in one direction or also in two directions or more directions. For example, a variation in hue and/or color density can occur from top of the lens to bottom of the spectacle lens substrate and, for example, simultaneously from the right side and/or the left side of the spectacle lens substrate or spectacle lens.

That is, the deposition of droplets of inkjet printing ink can occur across the spectacle lens substrate from one side to the other such that a variation in hue and/or color density occurs from top to bottom of the spectacle lens substrate or vice versa and/or from the right side to the left side of the spectacle lens substrate or vice versa.

Thus, the present invention allows to print more than one color gradient, for example two or three gradients of color on at least one of the front surface or back surface of the spectacle lens substrate, wherein the color can be the same or different from each other.

Moreover, it is an advantage of the present invention to produce a tinted spectacle lens substrate or a tinted spectacle lens in a compact and efficient time and energy saving method in that, for example, only one combined curing step is to be performed.

The present invention follows a new approach by printing drops of various inkjet printing inks such that drops are getting into physical contact with each other, for example, side-by-side and/or on top of each other, wherein these drops of various inkjet printing inks are not distinguishable anymore after curing process.

The tinted spectacle lens of the present invention having a front surface and a back surface, comprises a color design on at least one of said front surface and back surface, wherein said color design is selected from the group consisting of a non-linear color gradient, contoured di- or polychromatic pattern, contoured di- or polychromatic figure, di- or polychromatic alphabetic code, di- or polychromatic numerical code, di- or polychromatic alphanumerical code, and combinations thereof.

As explained above, the non-linear color gradient may have a curved or semi-circular appearance. This color gradient may be made of a single color or of two, three or more colors. The non-linear gradient may also have a wave-like contour. The non-linear gradient may also have a contour with a cut-out in the lower middle part of the spectacle lens substrate, wherein the lower left part and the lower right part of the spectacle lens are still tinted. Due to the use of a clear uncured base coat which limits the flowability of subsequently printed drops of colored inkjet-printing ink, any color design or any distribution of color can be present on a spectacle lens substrate.

For example, an uncured base coat can be arranged first on the complete surface, which can be the front surface and/or the back surface of a spectacle lens substrate.

Following this, according to an embodiment of the invention, a non-linear gradient of a first color can be arranged on the clear base coat. Finally, a compensation clear coat is arranged to obtain a stack with uniform thickness along the lens substrate. The compensation layer provides a smooth surface.

According to another embodiment at least one of a dichromatic or polychromatic picture element, a dichromatic or polychromatic logo, a dichromatic or polychromatic alphabetic code, a dichromatic or polychromatic numerical code, and a dichromatic or polychromatic alphanumerical code can be arranged, wherein the various colors can be arranged in an abutting and/or overlapping manner. Finally, a compensation clear coat is arranged to obtain a stack with uniform thickness. The compensation layer provides a smooth surface.

The smooth surface provided by the compensation layer is important in terms of reducing optical interference effects, for example, when applying additional functional coatings. For example, these functional layers can be selected from the group consisting of hard coat, adhesive layer, anti-reflection coating, anti-UV light layer, clean coat, anti-fog coat, and combinations thereof. It is, however, possible to make use of other and further functional layer(s) which can be applied to the tinted spectacle lens substrate, i.e., over the colored layer(s) deposited via inkjet printing according to the present invention. A smooth surface of the stack of layers, applied via inkjet printing according to the present invention, allows to apply further functional layer(s) with a defined layer thickness each and, thus, to provide a coating structure having superior optical properties.

The invention will be further illustrated with the following Figures and Examples. The invention is not to be construed to be limited to these Figures and Examples.

### Figures

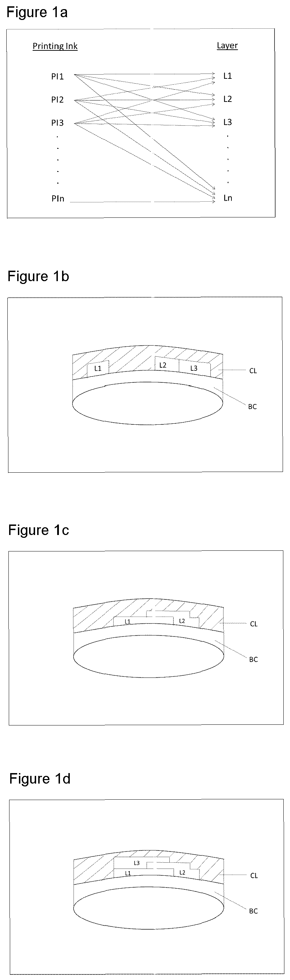

**Fig. 1a** shows schematically possible orders of printing inkjet printing inks (PI1), (PI2), (PI3), ..., (Pln) to generate layers (I1), (I2), (L3), ... (Ln) on a surface of a spectacle lens substrate coated with a base coat (BC).
**Fig. 1b** shows an arrangement of layer (L1) spaced apart from layers (L2) and (L3) which are in abutting contact with each other on a surface of a spectacle lens substrate coated with a base coat (BC). A compensation layer (CL) is printed over the described layer arrangement to provide a stack having a defined uniform thickness.
**Fig. 1c** shows an arrangement of layer (L1) partially overlapped by layer (L2) on a surface of a spectacle lens coated with a base coat (BC). A compensation layer (CL) is printed over the described layer arrangement to provide a stack having a defined uniform thickness.
**Fig. 1d** shows an arrangement of layer (L1) partially overlapped by layer (L2) on a surface of a spectacle lens coated with a base coat (BC). Layer 3 in turn partially overlaps layer (L1) and layer (L3). and (L3) which are in abutting contact with each other. A compensation layer (CL) is printed over the described layer arrangement to provide a stack having a defined uniform thickness.

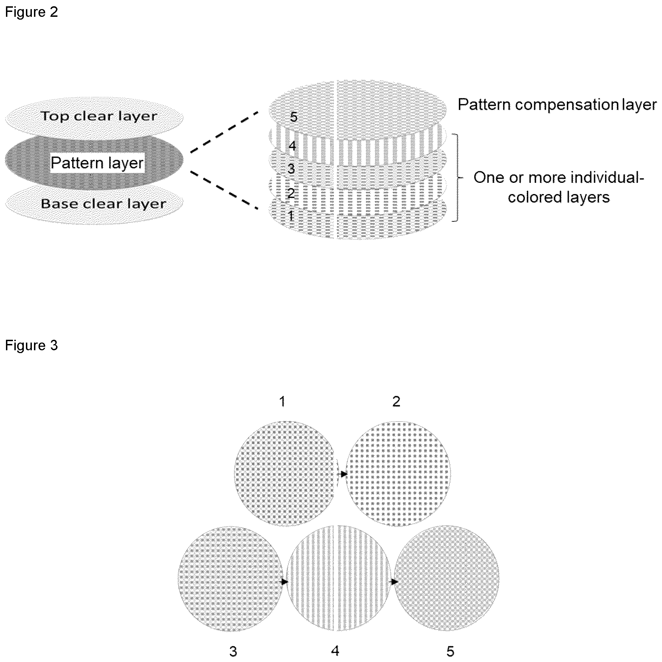

**Fig.2** shows schematically the structure of a tinted spectacle lens substrate, wherein a base layer (base coat) is applied first and subsequently one or more in individually colored layers arranged on top of each other, and finally a compensation layer.
**Fig. 3** shows schematically a top view of the individually colored layers contained in the structure shown in Fig. 2.

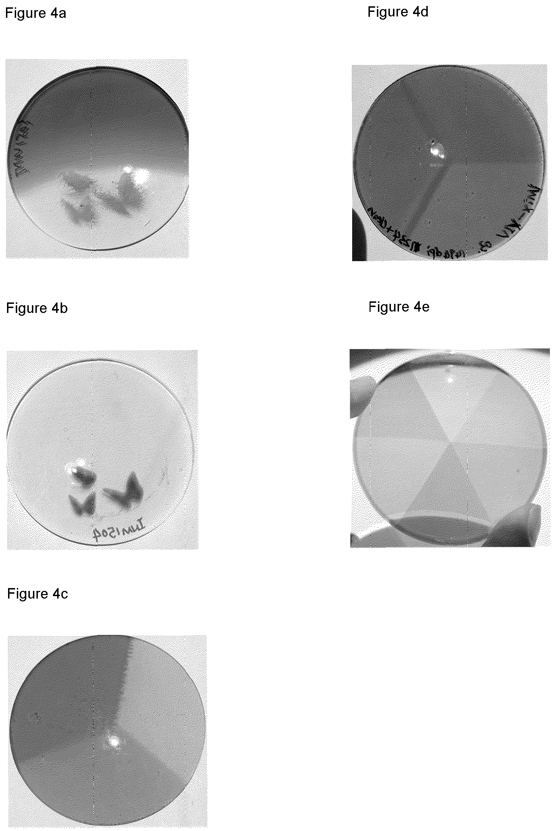

**Fig. 4a** shows a photograph of a tinted spectacle lens substrate without a base layer (base coat) over which color layers were printed following a butterfly picture, which the printed butterfly is highly blurred.
**Fig. 4b** shows a photograph of a tinted spectacle lens substrate with a base layer (base coat) according to the invention, over which color layers were printed with a line of text and a highly resolved butterfly picture.
**Fig. 4c** shows a photograph of a tinted spectacle lens substrate (from a single color) without a base layer (base coat) over which a low-resolved multiply segmented color layer is printed.
**Fig. 4d** shows a photograph of a tinted spectacle lens substrate (from multiple colors) without a base layer (base coat) over which a low-resolved multiply segmented color layer is printed, wherein the interference area (area of overlap) has a width of over 2 mm.
**Fig. 4e** shows a photograph of a tinted spectacle lens substrate (from multiple colors) with a base layer (base coat) over which a high-resolved multiply segmented color layer is printed, wherein the interference area (area of overlap) has a width of less than 500 µm.

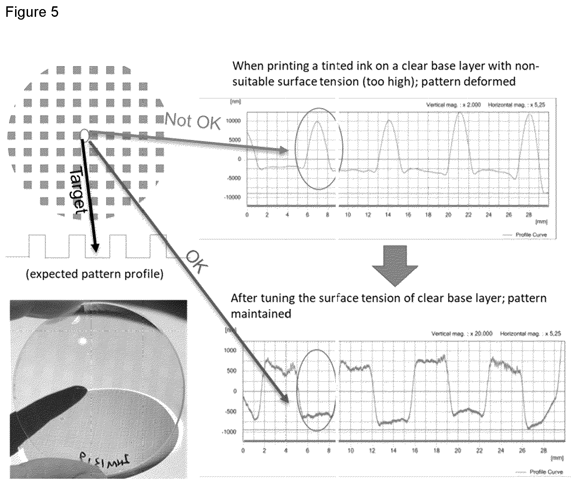

**Fig. 5** shows the effect of printing a colored inkjet printing ink with a square pattern on a base layer (base coat) with a surface tension which is equal to the surface tension of the applied colored inkjet printing ink (result: Not OK), in comparison of printing a colored inkjet printing ink with a square pattern on a base layer (base coat) with a surface tension which is lower than to the surface tension of the applied colored inkjet printing ink (result: OK). The respectively obtained measured curve, measured by a surface texture measuring instrument (Surfcom 3DF), show that when using a base layer (base coat) having a surface tension which is equal to the surface tension of the colored inkjet printing ink, the printed square form is not maintained (result: Not OK). The printed pattern deformed. However, when using a base layer (base coat) having a surface tension which is lower than the surface tension of the colored inkjet printing ink, the printed square form is maintained (result: OK).

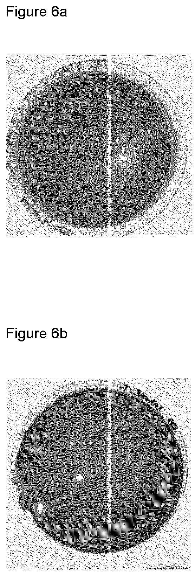

**Fig. 6a** shows a photograph of a tinted spectacle lens substrate wherein 6 layers of an identical colored inkjet printing ink are subsequently printed on each other, wherein after printing each colored layer said colored layer was partially cured before printing the next layer. The obtained tinted spectacle lens substrate showed an increased haze level, measured by HUNTERLAB UltraScan PRO UV-VIS Spectrophotometer (US), equipped with D65 light source, haze% = 45.9.
**Fig. 6b** shows a photograph of a tinted spectacle lens substrate wherein 6 layers of an identical colored inkjet printing ink are subsequently printed on each other, wherein after printing each colored layer said colored layer no separate curing step was performed before printing the next layer. The curing step was performed only after having printed the last-colored layer. The obtained tinted spectacle lens substrate showed a neglectable haze level, measured by HUNTERLAB UltraScan PRO UV-VIS Spectrophotometer (US), equipped with D65 light source, haze% = 0.1.

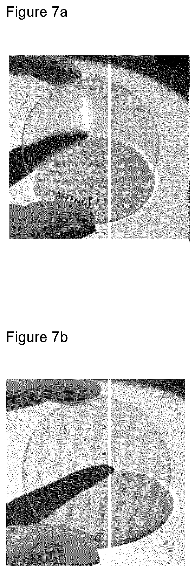

**Fig. 7a** shows a photograph of a tinted spectacle lens substrate wherein a clear base coat ink was first printed covering the whole lens substrate and the blue color ink was subsequently printed on top of base coat following a grid pattern, wherein after printing each layer said layer was partially cured before printing the next layer. The curing step was performed again after having printed the last-colored layer. The obtained tinted spectacle lens substrate showed an increased haze level, measured by HUNTERLAB UltraScan PRO UV-VIS Spectrophotometer (US), equipped with D65 light source, haze% = 3.6.
**Fig. 7b** shows a photograph of a tinted spectacle lens substrate wherein a clear base coat ink was first printed covering the whole lens substrate and the blue color ink was subsequently printed on top of base coat following a grid pattern, wherein after printing each layer no separate curing step was performed before printing the next layer. The curing step was performed only after having printed the last-colored layer. The obtained tinted spectacle lens substrate showed a neglectable haze level, measured by HUNTERLAB UltraScan PRO UV-VIS Spectrophotometer (US), equipped with D65 light source, haze% = 0.4.

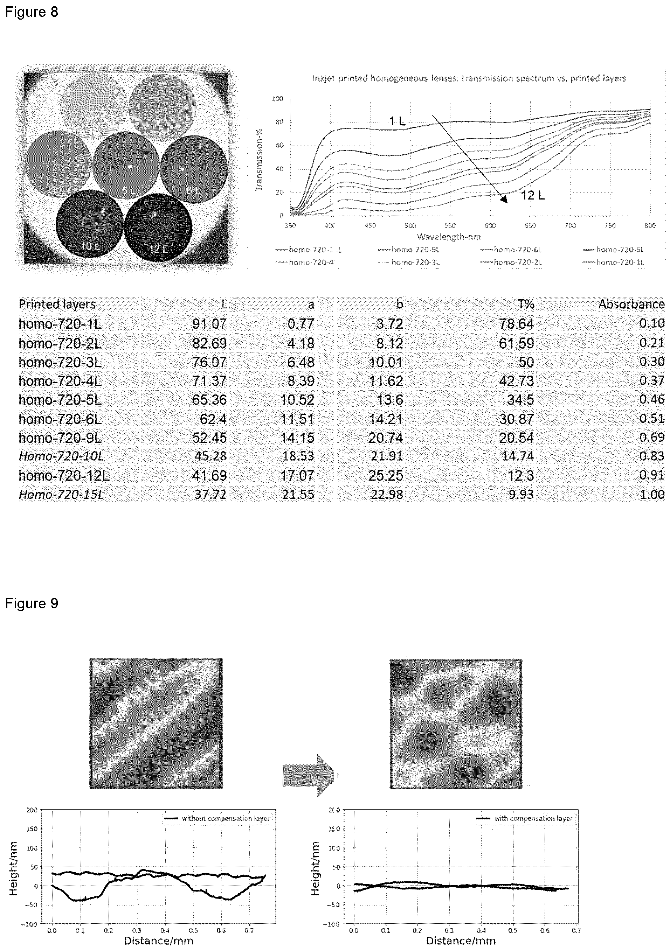

**Fig. 8** shows tinted spectacle lens substrates which are printed with an increasing number of printing ink layers of an identically colored inkjet printing ink by increasing the number from 1 to 3 to 4 to 5 to 6 to 9 to 12. Moreover, in these examples no base layer (base coat) was printed. Between the printing steps no curing was performed. After having printed the indicated number of layers, a combined curing step was performed. It can be seen from the transmittance spectrum that the tinted spectacle lens substrates show a transmission rate according to the color density and have a neglectable haze level.
The measured values are shown in the Table.
**Fig. 9** shows that printing a clear compensation layer on a spectacle lens substrate tinted by a square pattern (such as exemplified in Fig. 4 (result: OK)) reduces roughness. The left microscopic picture shows the surface of the tinted spectacle lens substrate without compensation layer and the right microscopic picture shows the surface of the tinted spectacle lens substrate with compensation layer. Each below is shown the respective measured results showing that the roughness is reduced. The measurements were performed with white light microscope (Zygo, USA).

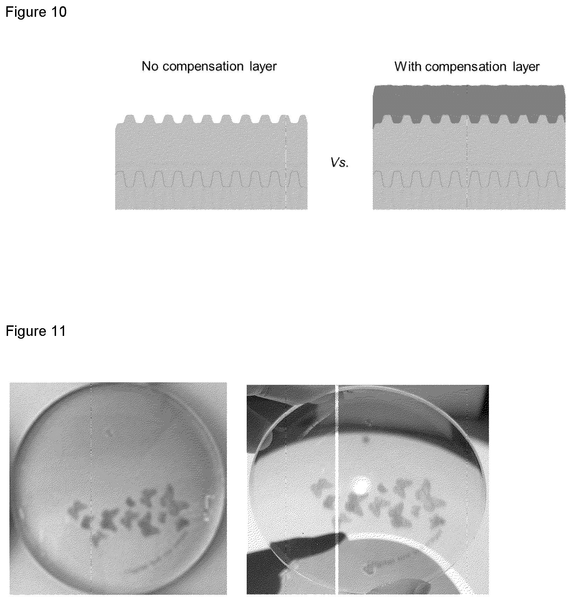

**Fig. 10** shows schematically the effect of the compensation layer. In the left picture the rough surface of the printed inkjet printing ink is schematically shown. In the right picture, is schematically shown how the compensation layer smooth the surface.
**Fig.11** shows two pictures of the same printed spectacle lens substrate with a base layer and multiple colors, where a first base layer was printed from a clear printing ink, and then the upward gradient pattern was mainly printed from orange color, where the butterfly was printed from red, yellow, and blue color printing inks, and where the text was printed from a cyan color. Both the butterflies and the text show good resolution.

### Examples

### Examples for inkjet printing ink formulation

The printing inks formulated for inkjet printing process are generally composed of a resin matrix of 36 wt.-% pentaerythritol acrylate (Sigma-Aldrich), 36 wt.-% hexanediol acrylate (Sigma-Aldrich), 22 wt.-% trimethylolpropane triglycidyl (Sigma-Aldrich), and 6% photo initiator triarylsulfoniumhexafluoroantimonat (mixed, 50 wt. % in propylene carbonate), in the following said resin matrix, to accommodate colouring matter such as dyes or pigments, a viscosity tuning agent (diluent monomers or high boiling solvents), and surface tension tuning agents.

### Example 1

69.8 g of said resin matrix was mixed with 30 g of solvent 1-Methoxy-2-propanol (Propylenglycol-methylether, PGME) in a 200 mL glass beaker equipped with a magnetic stirrer. After mixing the components, 0.2 g of surfactant BYK-333 was added to the solution and kept for stirring for another 2 hours. The ink was filtered via 1.2 um size membrane filter and kept for still for 30 mins before infilling into printer cartridge. The formulated inkjet printing ink here was used as a base coat ink.

### Example 2

69.8 g of said resin matrix was mixed with 30 g of solvent Methyl isobutyl ketone in a 200 mL glass beaker equipped with a magnetic stirrer. After mixing the components, 0.5 g of surfactant BYK-333 was added to the solution and kept for stirring for another 2 hours. The ink was filtered via 1.2 um size membrane filter and kept for still for 30 mins before infilling into printer cartridge. The formulated inkjet printing ink here was used as a clear compensation ink.

### Example 3

1.4 grams of solvent red 27 was mixed with 30 g MIBK solvent in a 200 mL glass beaker equipped with a magnetic stirrer. After the dyes dissolved, 69.8 g of said resin matrix was added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Example 4

1.4 grams of solvent yellow 179 was mixed with 30 g of solvent 1-methoxy-2-propanol (propylenglycol-methylether, PGME) solvent in a 200 mL glass beaker equipped with a magnetic stirrer. After the dyes dissolved, 69.8 g of said resin matrix was added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Example 5

1.4 grams of solvent blue 104 was mixed with 30 g of solvent 1-methoxy-2-propanol (propylenglycol-methylether, PGME) solvent in a 200 mL glass beaker equipped with a magnetic stirrer. After the dyes dissolved, 69.8 g of said resin matrix was added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Example 6

1.4 grams of solvent orange 54 was mixed with 30 g of solvent 1-methoxy-2-propanol (propylenglycol-methylether, PGME) solvent in a 200 mL glass beaker equipped with a magnetic stirrer. After the dyes dissolved, 69.8 g of said resin matrix was added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Example 7

1.4 grams of solvent blue 67 (color cyan) was mixed with 30 g of solvent 1-Methoxy-2-propanol (propylenglycol-methylether, PGME) solvent in a 200 mL glass beaker equipped with a magnetic stirrer. After the dyes dissolved, 69.8 g of said resin matrix added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Example 8

A dye mixture of 0.19 g of solvent red 27, 0.26 g solvent yellow 179, 0.34 g solvent blue 104 and 0.61 g solvent orange 54 was mixed with 30 g of solvent 1-methoxy-2-propanol (propylenglycol-methylether, PGME) solvent in a 200 mL glass beaker equipped with a magnetic stirrer. After the dyes dissolved, 69.8 g of said resin matrix was added into the coloured solution. After stirring for 2 hours, 0.2 g surfactant (BYK-333) was added to the formulation and kept stirring for 2 hours. The ink was filtered via 1.2 um size membrane filter and kept for still for 30 mins before infilling into printer cartridge.

### Examples for inkjet printing ink process

Printing tests were performed on different printers and different printheads. Both clear (base coat material) and coloured inkjet printing inks was directly printed on curved lens substrates. The printing distance was defined as: the standing height of the curved lens substrate was measured and distance between printhead and print substrate was calculated as the lens standing height plus 1 mm. The printed lens was cured in a broadband UV setup (UV-1000D).

### Example 9

Dimatix inkjet printer 2850 was used to print, equipped with a 10 pL cartridge. Printing was performed at 1440 dpi, following BMP patterns of three butterflies. Orange colour inkjet printing ink, red and cyan colour inkjet printing ink were used to print. During the printing, the orange, red, cyan colour inkjet printing ink was printed following a pattern with butterfly design, layer after layer. Curing was performed after final step pf printing with UV-1000D. The cured lens is shown as Fig. 4a. No base coat was applied. The butterflies are blurred.

### Example 10

Dimatix inkjet printer 2850 was used to print, equipped with a 10 pL cartridge. Printing was performed at 1440 dpi, following BMP patterns of three butterflies. Clear inkjet printing ink (base coat material), orange colour inkjet printing ink, red and cyan colour inkjet printing ink were used to print. During the printing, a clear inkjet printing ink (base coat material) was first printed under a pattern with homogeneous distribution of dots, and then the orange, red, cyan colour inkjet printing ink was printed following a pattern with butterfly design, layer after layer. Curing was performed after final step pf printing with UV-1000D. The cured lens is shown as Fig. 4b. The butterflies are well resolved and are clearly recognizable for the naked eye.

### Example 11

Dimatix inkjet printer 2850 was used to print, equipped with a 10 pL cartridge. Printing was performed at 1440 dpi, following a pattern with varied distribution of dots in three segments. The red colour inkjet printing ink was used to print. During the printing, the red colour inkjet printing ink was printed following the three-segment pattern. Curing was performed after final step pf printing with UV-1000D. The cured lens is shown as Fig. 4c. No base coat was applied. There is a blurred interference range between the different segments.

### Example 12

Dimatix inkjet printer 2850 was used to print, equipped with a 10 pL cartridge. Printing was performed at 1080 dpi, following a pattern with varied distribution of dots in three segments. Red colour inkjet printing ink and cyan colour inkjet printing ink were used to print. During the printing, the red and cyan colour inkjet printing ink was printed following the three-segment pattern, layer after layer. A top compensation layer was printed afterwards. Curing was performed after final step pf printing with UV-1000D. The cured lens is shown as Fig. 4d. No base coat was applied. There is a blurred interference range between the different segments.

### Example 13

Dimatix inkjet printer 2850 was used to print, equipped with a 10 pL cartridge. Printing was performed at 1080 dpi, following a pattern with varied distribution of dots in six segments. Clear ink inkjet printing (base coat material), yellow ink, orange, and cyan inkjet printing ink were used to print. During the printing, a clear ink inkjet printing was first printed under a pattern with homogeneous distribution of dots, and then the yellow, orange, cyan and orange inkjet printing ink was printed following the six-segment pattern, layer after layer. A top compensation layer was printed afterwards. Curing was performed after final step pf printing with UV-1000D. The cured lens is shown as Fig. 4e. The areas of different segments have well resolved edges, which are clearly recognizable for the naked eye.

### Example 14

Pixdro LP50 inkjet printer was used to print, equipped with a 14 pL KM512 printhead. Printing was performed at 720 dpi, following a pattern with a homogeneous distribution of dots. The mixed colour inkjet printing ink was used to print. During the printing, the mixed colour inkjet printing ink was printed following a homogeneous circle pattern, and then a pinning (partial curing) with LED 385nm was performed after each printing step; this process was repeated for 6 times. Curing was performed after final step pf printing with UV-1000D. The cured lens is shown as Fig. 6a. The lens shows roughened tinted surface with a strong haze.

### Example 15

Pixdro LP50 inkjet printer was used to print, equipped with a 14 pL KM512 printhead. Printing was performed at 720 dpi, following a pattern with a homogeneous distribution of dots. The mixed colour inkjet printing ink was used to print. During the printing, the mixed colour inkjet printing ink was printed following a homogeneous circle pattern, repeated for 6 times. Curing was performed after final step pf printing with UV-1000D. The cured lens is shown as Fig. 6b. The lens is tinted well with a no recognizable haze.

### Example 16

Pixdro LP50 inkjet printer was used to print, equipped with a 14 pL KM512 printhead. Printing was performed at 1080 dpi, following a grid pattern with varied distribution of dots. Clear inkjet printing ink (base coat material) and blue colour inkjet printing ink were used to print. During the printing, a clear inkjet printing ink was first printed under a pattern with homogeneous distribution of dots, and then a pinning (partial curing) with LED 385nm was performed; afterwards the blue colour inkjet printing ink was printed following a grid pattern. Curing was performed after final step pf printing with UV-1000D. The cured lens is shown as Fig. 7a. The lens shows a strong haze, so that the finger behind the lens appears blurred.

### Example 17

Pixdro LP50 inkjet printer was used to print, equipped with a 14 pL KM512 printhead. Printing was performed at 1080 dpi, following a grid pattern with varied distribution of dots. Clear inkjet printing ink (base coat material) and blue colour inkjet printing ink were used to print. During the printing, the clear ink was first printed under a pattern with homogeneous distribution of dots, and then the blue colour inkjet printing ink was printed following a grid pattern. Curing was performed after final step pf printing with UV-1000D. The cured lens is shown as Fig. 7b. The lens shows no recognizable haze, so that the finger behind the lens is clearly resolved.

### Example 18

Pixdro LP50 inkjet printer was used to print, equipped with a 14 pL KM512 printhead. Printing was performed at 720 dpi, following a pattern with a homogeneous distribution of dots. The mixed colour inkjet printing ink was used to print. The printing was repeated for varied times, ranging from 1 to 15. For each lens, the curing was performed after final step pf printing with UV-1000D. The cured lenses and their corresponded T% spectrum (see Table of Fig. 8) and colour information are shown as Fig. 8.

### Example 19

Dimatix inkjet printer 2850 was used to print, equipped with a 10 pL cartridge. Printing was performed at 1080 dpi, following more complex patterns with selected distribution of dots. Clear inkjet printing inks, orange colour inkjet printing ink, cyan colour inkjet printing ink and blue colour inkjet printing ink were used to print. During the printing, the clear inkjet printing ink (base coat material) was first printed under a pattern with homogeneous distribution of dots, and then the orange colour inkjet printing ink follows a pattern with gradient distribution of dots, the blue colour inkjet printing ink follows a pattern composed of butterflies, cyan colour follows a design for text, and afterwards, another clear ink was printed according to the compensation pattern. Curing was performed after final step pf printing with UV-1000D. The cured lens is shown as Fig. 11. The butterfly is finely structured and the different colours are clearly visible.

## Claims

1. An ink jet printing method of tinting a spectacle lens substrate comprising the steps:
(a) providing a spectacle lens substrate having a front surface and a back surface, wherein said spectacle lens substrate can be precoated,
(b) printing droplets of at least a first inkjet printing ink (PI1) to form at least a first layer (L1) and printing droplets of at least a second inkjet printing ink (PI2) to form at least a second layer (L2) on at least one of said front surface and back surface,
wherein at least one of said at least first inkjet printing ink (PI1) and said at least second inkjet printing ink (PI2) is colored,
said at least first layer (L1) and said at least second layer (L2), each covering fully or partially at least one of said front surface and back surface, forming a stack which covers at least one of said front surface and back surface, wherein said at least first layer (L1) and said at least second layer (L2) are at least partially overlapping in said stack,
(c) curing said at least first layer (L1) and said at least second layer (L2) together in a combined curing step, **characterized in that** droplets of said at least first inkjet printing ink (PI1)) and droplets of said at least second inkjet printing ink (PI2) being in physical contact with each other are at least partially coalescing before curing.

2. The inkjet printing method according to claim 1,
wherein said stack covering at least one of said front surface and said back surface of said spectacle lens substrate with a uniform thickness.

3. The inkjet printing method according to claim 1 or 2, wherein one of said at least first inkjet printing ink (PI1) and of said at least second inkjet printing ink (PI2) is a clear inkjet printing ink.

4. The inkjet printing method according to any one of claims 1 to 3 wherein said at least first inkjet printing ink is colored and said at least second inkjet printing ink (PI2) is a clear inkjet printing ink which is printed over said first inkjet printing ink (PI1) to compensate variations in the thickness of the at least first layer (L1) to such an extent to provide a stack with a uniform thickness.

5. The inkjet printing method according to any one of claims 1 to 4, comprising the steps:
(a) printing at least a first colored layer (L1) on at least one of said front surface and back surface to partially or fully coat the respective surface,
(b) printing at least a second colored layer (L2) on said at least one of said front surface and back surface, coated fully or partially with said first colored layer (L1), to partially or fully coat the respective surface,
(c) printing a clear layer on said at least one of said front surface and back surface coated fully or partially with said first colored layer (L1) and said second colored layer (L2) to compensate variations in the thickness of the at least first layer (L1) and the at least second layer (L2) to such an extent to provide a stack with a uniform thickness.

6. Computer-implemented method of digitally designing a tinted spectacle lens for the purpose of a use of the digital design for a manufacture of said tinted spectacle lens by inkjet printing; said computer-implemented method comprises the steps of:
(a) positioning droplets and calculating a number of droplets of at least a first inkjet printing ink (PI1), to form at least a first layer (L1), and positioning droplets and calculating a number of droplets of at least a second inkjet printing ink (PI2), to form at least a second layer (L2), on at least one of a front surface and back surface of a spectacle lens substrate, such said at least first layer (L1) and said at least second layer (L2) each covers fully or partially the respective surface, said at least first layer (L1) and said at least second layer (L2) forming a stack, wherein said at least first layer (L1) and said at least second layer (L2) are at least partially overlapping, **characterized in that** droplets of said at least first inkjet printing ink (PI1)) and droplets of said at least second inkjet printing ink (PI2) being in physical contact with each other are at least partially coalescing before curing, such that the obtained stack matches the digital design of the tinted spectacle lens and that the stack has a uniform thickness.

7. Tinted spectacle lens having a front surface and a back surface,
wherein said tinted spectacle lens is obtainable by a method according to any one of claims 1 to 5, wherein
said tinted spectacle lens comprises a color design on at least one of said front surface and back surface, said color design is selected from the group consisting of a non-linear color gradient, contoured di- or polychromatic pattern, contoured di- or polychromatic figure, di- or polychromatic alphabetic code, di- or polychromatic numerical code, di- or polychromatic alphanumerical code, and combinations thereof.

## Patentansprüche

1. Tintenstrahldruckverfahren zum Tönen eines Brillenglassubstrats, umfassend die Schritte:
(a) Bereitstellen eines Brillenglassubstrats mit einer vorderen Oberfläche und einer hinteren Oberfläche, wobei das Brillenglassubstrat vorbeschichtet sein kann,
(b) Drucken von Tröpfchen wenigstens einer ersten Tintenstrahldrucktinte (PI1), um wenigstens eine erste Schicht (L1) zu bilden, und Drucken von Tröpfchen wenigstens einer zweiten Tintenstrahldrucktinte (PI2), um wenigstens eine zweite Schicht (L2) zu bilden, auf wenigstens einer von der vorderen Oberfläche und der hinteren Oberfläche,
wobei wenigstens eine von der wenigstens ersten Tintenstrahldrucktinte (PI1) und der wenigstens zweiten Tintenstrahldrucktinte (PI2) gefärbt ist,
wobei die wenigstens erste Schicht (L1) und die wenigstens zweite Schicht (L2), die jeweils wenigstens eine von der vorderen Oberfläche und der hinteren Oberfläche vollständig oder teilweise bedecken, einen Stapel bilden, der wenigstens eine von der vorderen Oberfläche und der hinteren Oberfläche bedeckt, wobei sich die wenigstens erste Schicht (L1) und die wenigstens zweite Schicht (L2) in dem Stapel wenigstens teilweise überlappen,
(c) Härten der wenigstens ersten Schicht (L1) und der wenigstens zweiten Schicht (L2) gemeinsam in einem kombinierten Härtungsschritt, **dadurch gekennzeichnet, dass** Tröpfchen der wenigstens ersten Tintenstrahldrucktinte (PI1) und Tröpfchen der wenigstens zweiten Tintenstrahldrucktinte (PI2), die sich in physischem Kontakt miteinander befinden, vor Härten wenigstens teilweise koaleszieren.

2. Tintenstrahldruckverfahren nach Anspruch 1,
wobei der Stapel wenigstens eine von der vorderen Oberfläche und der hinteren Oberfläche des Brillenglassubstrats mit einer gleichmäßigen Dicke bedeckt.

3. Tintenstrahldruckverfahren nach Anspruch 1 oder 2, wobei eine von der wenigstens ersten Tintenstrahldrucktinte (PI1) und der wenigstens zweiten Tintenstrahldrucktinte (PI2) eine klare Tintenstrahldrucktinte ist.

4. Tintenstrahldruckverfahren nach einem der Ansprüche 1 bis 3, wobei die wenigstens erste Tintenstrahldrucktinte gefärbt ist und die wenigstens zweite Tintenstrahldrucktinte (PI2) eine klare Tintenstrahldrucktinte ist, die über die erste Tintenstrahldrucktinte (PI1) gedruckt wird, um Variationen der Dicke der wenigstens ersten Schicht (L1) zu einem solchen Maß zu kompensieren, dass ein Stapel mit einer gleichmäßigen Dicke bereitgestellt wird.

5. Tintenstrahldruckverfahren nach einem der Ansprüche 1 bis 4, umfassend die Schritte:
(a) Drucken wenigstens einer ersten gefärbten Schicht (L1) auf wenigstens eine von der vorderen Oberfläche und der hinteren Oberfläche, um die entsprechende Oberfläche teilweise oder vollständig zu beschichten,
(b) Drucken wenigstens einer zweiten gefärbten Schicht (L2) auf die wenigstens eine von der vorderen Oberfläche und der hinteren Oberfläche, die vollständig oder teilweise mit der ersten gefärbten Schicht (L1) beschichtet ist, um die entsprechende Oberfläche teilweise oder vollständig zu beschichten,
(c) Drucken einer klaren Schicht auf die wenigstens eine von der vorderen Oberfläche und der hinteren Oberfläche, die vollständig oder teilweise mit der ersten gefärbten Schicht (L1) und der zweiten gefärbten Schicht (L2) beschichtet ist, um Variationen der Dicke der wenigstens ersten Schicht (L1) und der wenigstens zweiten Schicht (L2) zu einem solchen Maß zu kompensieren, dass ein Stapel mit einer gleichmäßigen Dicke bereitgestellt wird.

6. Computerimplementiertes Verfahren zum digitalen Entwerfen eines getönten Brillenglases zum Zweck einer Verwendung des digitalen Designs für eine Herstellung des getönten Brillenglases durch Tintenstrahldruck; wobei das computerimplementierte Verfahren die Schritte umfasst:
(a) Positionieren von Tröpfchen und Berechnen einer Anzahl von Tröpfchen wenigstens einer ersten Tintenstrahldrucktinte (PI1), um wenigstens eine erste Schicht (L1) zu bilden, und Positionieren von Tröpfchen und Berechnen einer Anzahl von Tröpfchen wenigstens einer zweiten Tintenstrahldrucktinte (PI2), um wenigstens eine zweite Schicht (L2) auf wenigstens einer von einer vorderen Oberfläche und einer hinteren Oberfläche eines Brillenglassubstrats zu bilden, so dass die wenigstens erste Schicht (L1) und die wenigstens zweite Schicht (L2) jeweils die entsprechende Oberfläche vollständig oder teilweise bedecken, wobei die wenigstens erste Schicht (L1) und die wenigstens zweite Schicht (L2) einen Stapel bilden, wobei sich die wenigstens erste Schicht (L1) und die wenigstens zweite Schicht (L2) wenigstens teilweise überlappen, **dadurch gekennzeichnet, dass** Tröpfchen der wenigstens ersten Tintenstrahldrucktinte (PI1) und Tröpfchen der wenigstens zweiten Tintenstrahldrucktinte (PI2), die sich in physischem Kontakt miteinander befinden, vor Härten wenigstens teilweise koaleszieren, so dass der erhaltene Stapel dem digitalen Design des getönten Brillenglases entspricht und dass der Stapel eine gleichmäßige Dicke aufweist.

7. Getöntes Brillenglas mit einer vorderen Oberfläche und einer hinteren Oberfläche,
wobei das getönte Brillenglas durch ein Verfahren nach einem der Ansprüche 1 bis 5 erhältlich ist, wobei das getönte Brillenglas auf wenigstens einer von der vorderen Oberfläche und der hinteren Oberfläche ein Farbdesign aufweist, wobei das Farbdesign ausgewählt ist aus der Gruppe bestehend aus einem nichtlinearen Farbgradienten, einer konturierten di- oder polychromatischen Struktur, einem konturierten di- oder polychromatischen Bild, einem di- oder polychromatischen alphabetischen Code, einem di- oder polychromatischen numerischen Code, einem di- oder polychromatischen alphanumerischen Code und Kombinationen davon.

## Revendications

1. Procédé d'impression par jet d'encre pour teinter un substrat de verre de lunettes comprenant les étapes de :
(a) la fourniture d'un substrat de verre de lunettes ayant une surface avant et une surface arrière, ledit substrat de verre de lunettes pouvant être pré-revêtu,
(b) l'impression de gouttelettes d'au moins une première encre d'impression à jet d'encre (PI1) pour former au moins une première couche (L1) et imprimer des gouttelettes d'au moins une seconde encre d'impression à jet d'encre (PI2) pour former au moins une seconde couche (L2) sur au moins une desdites surface avant et surface arrière,
au moins une de ladite au moins première encre d'impression à jet d'encre (PI1) et de ladite au moins seconde encre d'impression à jet d'encre (PI2) étant colorée,
ladite au moins première couche (L1) et ladite au moins seconde couche (L2), recouvrant chacune totalement ou partiellement au moins une desdites surface avant et surface arrière, formant un empilement qui recouvre au moins une desdites surface avant et surface arrière, ladite au moins première couche (L1) et ladite au moins seconde couche (L2) étant au moins partiellement superposées dans ledit empilement,
(c) le durcissement de ladite au moins première couche (L1) et de ladite au moins seconde couche (L2) ensemble dans une étape de durcissement combinée, **caractérisé en ce que** des gouttelettes de ladite au moins première encre d'impression à jet d'encre (PI1) et des gouttelettes de ladite au moins seconde encre d'impression à jet d'encre (PI2) qui sont en contact physique les unes avec les autres sont au moins partiellement coalescentes avant le durcissement.

2. Procédé d'impression à jet d'encre selon la revendication 1,
ledit empilement recouvrant au moins une de ladite surface avant et de ladite surface arrière dudit substrat de verre de lunettes avec une épaisseur uniforme.

3. Procédé d'impression à jet d'encre selon la revendication 1 ou 2, l'une de ladite au moins première encre d'impression à jet d'encre (PI1) et de ladite au moins seconde encre d'impression à jet d'encre (PI2) étant une encre d'impression à jet d'encre transparente.

4. Procédé d'impression à jet d'encre selon l'une quelconque des revendications 1 à 3, ladite au moins première encre d'impression à jet d'encre étant colorée et ladite au moins seconde encre d'impression à jet d'encre (PI2) étant une encre d'impression à jet d'encre transparente qui est imprimée sur ladite première encre d'impression à jet d'encre (PI1) pour compenser des variations de l'épaisseur de l'au moins une première couche (L1) dans une telle mesure pour fournir un empilement avec une épaisseur uniforme.

5. Procédé d'impression à jet d'encre selon l'une quelconque des revendications 1 à 4, comprenant les étapes de :
(a) l'impression d'au moins une première couche colorée (L1) sur au moins une desdites surface avant et surface arrière pour revêtir partiellement ou totalement la surface respective,
(b) l'impression d'au moins une seconde couche colorée (L2) sur ladite au moins une desdites surface avant et surface arrière, revêtue totalement ou partiellement par ladite au moins première couche colorée (L1), pour revêtir partiellement ou totalement la surface respective,
(c) l'impression d'une couche claire sur ladite au moins une desdites surface avant et surface arrière revêtues totalement ou partiellement de ladite première couche colorée (L1) et de ladite seconde couche colorée (L2) pour compenser les variations d'épaisseur de l'au moins une première couche (L1) et de l'au moins une seconde couche (L2) dans une telle mesure pour fournir un empilement avec une épaisseur uniforme.

6. Procédé de conception numérique d'un verre de lunettes teinté, mis en œuvre par ordinateur, en vue d'une utilisation de la conception numérique pour une fabrication dudit verre de lunettes teinté par impression à jet d'encre ; ledit procédé mis en œuvre par ordinateur comprenant les étapes de :
(a) positionnement de gouttelettes et calcul d'un nombre de gouttelettes d'au moins une première encre d'impression à jet d'encre (PI1), pour former au moins une première couche (L1), et positionnement de gouttelettes et calcul d'un nombre de gouttelettes d'au moins une seconde encre d'impression à jet d'encre (PI2), pour former au moins une seconde couche (L2), sur au moins l'une d'une surface avant et d'une surface arrière d'un substrat de verre de lunettes, de telle sorte que ladite au moins première couche (L1) et ladite au moins seconde couche (L2) recouvre chacune totalement ou partiellement la surface respective, ladite au moins première couche (L1) et ladite au moins seconde couche (L2) formant un empilement, ladite au moins première couche (L1) et ladite au moins seconde couche (L2) se chevauchant au moins partiellement, **caractérisé en ce que** des gouttelettes de ladite au moins première encre d'impression à jet d'encre (PI1) et des gouttelettes de ladite au moins seconde encre d'impression à jet d'encre (PI2) étant en contact physique les unes avec les autres sont au moins partiellement coalescentes avant durcissement, de sorte que l'empilement obtenu s'adapte à la conception numérique du verre de lunettes teinté et que l'empilement présente une épaisseur uniforme.

7. Verre de lunettes teinté comportant une surface avant et une surface arrière,
dans lequel ledit verre de lunettes teinté peut être obtenu par un procédé selon l'une quelconque des revendications 1 à 5, dans lequel
ledit verre de lunettes teinté comprenant un motif coloré sur au moins l'une desdites surface avant et surface arrière, ledit motif coloré étant sélectionné dans le groupe constitué par un dégradé de couleurs non linéaire, un motif di- ou polychromatique profilé, une figure di- ou polychromatique profilée, un code alphabétique di- ou polychromatique, un code numérique di- ou polychromatique, un code alphanumérique di- ou polychromatique et des combinaisons de ceux-ci.
